(19)

Europäisches Patentamt
European Patent Office
Office européen des brevets

(11) **EP 3 793 097 A1**

(12) **EUROPEAN PATENT APPLICATION**

(43) Date of publication:
**17.03.2021 Bulletin 2021/11**

(51) Int Cl.:
***H04B 7/06*** (2006.01)

(21) Application number: **19382801.9**

(22) Date of filing: **16.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Telefonica, S.A.**
**28013 Madrid (ES)**

(72) Inventors:
- **LORCA HERNANDO, Javier**
  **28013 MADRID (ES)**
- **SERNA SANTIAGO, Elena**
  **28013 MADRID (ES)**
- **ESTEBAN RIVAS, Juan, Francisco**
  **28013 MADRID (ES)**

(74) Representative: **Herrero & Asociados, S.L.**
**Cedaceros, 1**
**28014 Madrid (ES)**

(54) **METHOD AND SYSTEM FOR OPTIMAL SPATIAL MULTIPLEXING IN WIRELESS COMMUNICATIONS SYSTEMS USING SU-MIMO TECHNIQUES**

(57)    A method and system for optimizing the performance of spatial multiplexing techniques in SU-MIMO wireless systems comprising subsectors where the presence of significant correlation between antenna elements can impair the performance of SU-MIMO techniques. The proposed solution ensures optimum selection of a specific combination of transmit antenna elements that maximizes SU-MIMO performance

EP 3 793 097 A1

**Description**

**Field of the invention**

The present invention has its application within the telecommunication sector, particularly in wireless communications. More specifically, the present invention proposes a method and system to optimize spatial multiplexing techniques in multi-antenna wireless communications systems (networks), said multi-antenna wireless systems using Single-User Multiple Input Multiple Output (SU-MIMO) techniques.

**Background of the invention**

Multiple Input Multiple Output (MIMO) techniques are one of the most efficient schemes for increasing the spectral efficiency per user, and per unit area, in wireless networks (for example, in any type of mobile telecommunications networks). MIMO techniques are characterized by using multiple antennas for transmission and/or reception at the wireless access point side and usually also at the user (device) side. Multi-User MIMO (MU-MIMO) techniques aim to multiplex several users (user devices) in the spatial domain by simultaneously creating beams that are tailored to the channel state conditions experienced by the users, while also keeping inter-user interference to a minimum; in contrast, Single-User MIMO (SU-MIMO) techniques only deals with a single user device, boosting the single user device throughput by means of spatial multiplexing.

SU-MIMO techniques (and also MU-MIMO techniques) are limited by the channel matrix characteristics, which in turn depend on the surrounding environment and the degree of correlation between the transmit (at the transmission side) and/or receive (at the reception side) antenna elements (also called radiating elements or simpler antennas). A high correlation can occur because of similarities in the antenna responses at the transmit side, the receive side, or both, and can also appear because of insufficient scattering phenomena that hinders excitation of the desired number of spatial layers. The consequence is the inability of the radiating system to exploit the degrees of freedom theoretically present in the wireless channel, thus leading to performance degradation.

In order to partially overcome these problems, massive MIMO systems employ a massive number of antennas side (one or two orders of magnitude higher than what would be needed in traditional MIMO systems) at the wireless access point (e.g. at the base station). The use of massive amounts of transmit and receive antennas at the base station side in Massive MIMO improves the performance of multi-antenna techniques, namely beamforming (which makes use of multiple independent transceiver chains with full amplitude/phase controls of the signals of each antenna), and spatial multiplexing. However, they are more often used in MU-MIMO whereas SU-MIMO performance can be strongly impacted by antenna correlation.

In addition to the above, performance of SU-MIMO techniques can be significantly impaired in line of sight (LOS) conditions. Transmit and receive antennas cannot in general be separated much more than half a wavelength if grating lobes are to be avoided. In LOS conditions, and with such inter-antenna spacing, the ability of the antennas to excite spatial layers can be impaired. This happens e.g. in Fixed Wireless Access (FWA) systems operating in millimetre-waves (above 6 GHz), which behave as wireless Point-to-Multipoint systems with good line of sight between the base station and the users. In these systems, the ability of prior art techniques to exploit SU-MIMO is reduced unless smart techniques are devised to select transmit antennas with the lowest possible RF coupling.

In order to help overcoming the SU-MIMO problems, base stations can benefit from the presence of several subsectors within a given sector, where subsectors are the result of any partition of a sector of a base station into multiple parts. That is, the coverage area of a base station is spatially divided in sectors, and each of said sectors are divided in sub-sectors. Subsectors can improve the received signal level by spatially isolating users with the aid of subsector beams, hence achieving additional beamforming gains. That is, wireless systems with the ability to define subsectors can improve the received signal quality. Subsectors, in many cases, do not provide simultaneous digital control of all the transmit antennas (antenna elements), but just a subset of them, as given by the maximum baseband processing power. As an example, the baseband unit may control a maximum of e.g. 8 simultaneous transmit chains, whereas the frontend can comprise three sectors with e.g. 4 antennas per sector, leading to 12 antennas. Finding the optimum association between controllable transmit chains and transmit antennas is therefore key to maximize SU-MIMO performance in this kind of systems.

Smarter strategies are therefore required in order to exploit the benefits of spatial multiplexing techniques in wireless multi-antenna systems using SU-MIMO techniques with subsectors.

**Summary**

The present invention solves the aforementioned problems and overcomes previously explained state-of-the-art limitations by proposing a method and a system for optimizing the performance of spatial multiplexing techniques in MIMO wireless (communications) systems comprising subsectors, where the presence of significant correlation between antenna elements can impair the performance of SU-MIMO techniques. In other words, the proposed embodiments present specific mechanisms to optimize SU-MIMO performance, efficiently exploiting the extra number of transmit and receive antennas at the base station side with subsectors.

Prior state-of-the-art techniques generally perform a static association of transmit RF (radiofrequency) chains and antennas, in such a way that spatial multiplexing employs of a pre-defined set of antenna elements at the base station. However, this approach is not the most efficient one when considering the presence of subsectors, because the actual correlation between antenna elements can make transmission more efficient when letting antennas from different subsectors be involved in the transmission towards a given user in SU-MIMO. The proposed present embodiments can overcome the limitations of prior art techniques by introducing an efficient method to select the optimum combination of transmit antennas that maximize performance. SU-MIMO performance optimization is achieved by maximizing the constant channel capacity or the ergodic capacity (depending on whether perfect channel conditions or channel distribution information respectively is available at the transmit side).

The SU-MIMO wireless systems where the proposed embodiments are applied can be any type of wireless communication system. In an embodiment, the wireless system is a cellular communications system for example a 2G, 3G, 4G or 5G mobile communications system or any other type of cellular communications systems. The user devices (equipment) may be mobile telephones, tablets, smartphones, laptops, computers, PCs... (and generally any electronic equipment or device that can be connected to the wireless communication system).

According to a first aspect, the present invention proposes a method to optimize the performance of a SU-MIMO wireless communications system, said wireless communications system comprising at least a base station, with at least one sector having $P$ subsectors with $N_t$ transmit antenna elements each and a user device (to be served using SU-MIMO wireless techniques) with $N_r$ receive antenna elements, being L the maximum number of transmit antenna elements simultaneously controllable by the base station at baseband processing level, characterized in that the method comprises the following steps:

a) Selecting a combination $A_i$ of L transmit antenna elements from the $PN_t$ transmit antenna elements and going to step b);

b) Calculating the channel capacity between the L transmit antenna elements contained in $A_i$ and the $N_r$ receive antenna elements of the user device; and going to step c);

c) If the calculated channel capacity is higher than a recorded maximum channel capacity or if there is no recorded maximum channel capacity (that is, it is the first iteration of the method), recording the value of the calculated channel capacity as the maximum channel capacity and recording actual combination of transmit antenna elements $A_i$, as the optimum combination of transmit antenna elements; and going to step d);

d) If all possible combinations $A_i$ of L transmit antenna elements have been selected, ending the method, otherwise going to step a).

In an embodiment, step b) further comprises obtaining a channel matrix $H_i$ between the $N_r$ receive antenna elements of the user device and the L transmit antenna elements contained in $A_i$. For example, $H_i = (h_{mn})|_{N_r x L}$, $m = 0,...,N_r - 1$, $n \in A_i$, where $h_{mn}$ denotes elements of the channel matrix H between the $PN_t$ transmit antenna elements of the sector of the base station and the $N_r$ receive antenna elements of the user device.

The optimum combination of transmit antenna elements obtained may be used by the wireless communications system during a time lower or equal than the coherence time of the channel between the transmit and the receive antenna elements.

The method may be periodically carried out every certain period of time (for example, a period of time is equal to the coherence time of the channels between the transmit and the receive antenna elements). The period of time may depend on the communications protocol used by the wireless system.

In an embodiment, said channel capacity is calculated as a constant channel capacity (assuming perfect channel knowledge at the transmit side, that is, in this case the base station should have full a-priori knowledge of the constant channel matrix).

Said constant channel capacity may be given by:

$$C = log\left|\mathbf{I}_{N_r} + \mathbf{H}_i\mathbf{Q}\mathbf{H}_i^{\mathbf{H}}\right|$$

where $I_{N_r}$ is the $N_r \times N_r$ identity matrix and $H_i$ is the $i$-th channel matrix constructed between the $N_r$ receive antenna elements of the user device and the L transmit antenna elements contained in $A_i$ and Q the transmit covariance matrix. The transmit covariance matrix $Q$ is an LxL matrix that may be defined by:

$$Q = \{Q_{ij}\} = \mathbb{E}\left[x_i x_j^T\right]$$

where $x_i\, x_j$ are the complex baseband symbols to be transmitted by the L transmit antenna elements contained in $A_i$.

In an embodiment, the channel capacity is given by:

$$C = \sum_{e=1}^{L'} \left(log(\mu \sigma_e^2)\right)^+,$$

where L' is the channel rank of the channel matrix, $\sigma_e$ are the singular values of the channel matrix $H_i$ constructed between the $N_r$ receive antennas at the user's device and the given combination $A_i$ of $L$ transmit antenna elements, $x^+$ is defined as max $(x, 0)$, and $\mu$ is the so-called waterfill level, calculated from the expression:

$$P_e = \left(\mu - \frac{1}{\sigma_e^2}\right)^+, 1 \le e \le L',$$

with $P_e$ being the power of the $e$-th eigenmode of the channel and $P_T = \sum_e P_e$ the total transmit power.

In an embodiment, said channel capacity is an ergodic capacity (assuming limited or no channel knowledge at the transmit side). For example, in this case, only the channel distribution information should be a-priori known at the base station.

Said ergodic capacity (assuming no channel knowledge at the transmit side) may be given by:

$$C = \mathbb{E}_{H_i}\left[log\left|\mathbf{I}_{N_r} + \frac{P_T}{N_r}\mathbf{H}_i\mathbf{H}_i^{\mathbf{H}}\right|\right],$$

where $\mathbb{E}_{H_i}$ denotes the expectation operator over the channel matrix $H_i$, $H_i$ is the $i$-th channel matrix constructed between the $N_r$ receive antenna elements of the user device and the L transmit antenna elements contained in $A_i$, $I_{N_r}$ is the $N_r \times N_r$ identity matrix and $P_T$ is the total transmit power.

In an embodiment, $A_i$ is a combination selected from all possible combinations of $PN_t$ antenna elements taken L by L without repetition, with i being one of $0, \dots, C_{PN_t}^{L} - 1$, being $C_{PN_t}^{L}$ the number of possible combinations given by:

$$C_{PN_t}^{L} = \binom{PN_t}{L} = \frac{(PN_t)!}{L!\,(PN_t - L)!}.$$

The SU-MIMO wireless communications system may be a 2G, 3G, 4G or 5G mobile communications system or any other wireless communications system using SU-MIMO techniques.

According to a second aspect, the present invention proposes systems which perform any of the above stated methods. For example, a SU-MIMO wireless communications system (a wireless communications system using SU-MIMO techniques to serve a user device) comprising:

- at least a base station, with at least one sector having $P$ subsectors with $N_t$ transmit antenna elements each, the base station having a baseband processing unit capable of simultaneously control a maximum of L transmit antenna elements;

- a user device with $N_r$ receive antenna elements;

- an electronic device to optimize the performance of the wireless communications system, configured to:

   a) Select a combination $A_i$ of L transmit antenna elements from the $PN_t$ transmit antenna elements;

   b) Calculate the channel capacity between the L transmit antenna elements contained in $A_i$ and the receive antenna elements of the user device;

   c) If the calculated channel capacity is higher than a recorded maximum channel capacity or if there is no recorded maximum channel capacity, record the value of the calculated channel capacity as the maximum channel capacity and record actual combination of transmit antenna elements $A_i$, as the optimum combination of transmit antenna elements;

   d) Repeat a), b) and c), until all possible combinations $A_i$ of L transmit antenna elements have been selected.

The electronic device, for example, may be part of the base station (for example of the baseband processing unit) or may be located in a core node of the MU-MIMO wireless communications system.

In a last aspect of the present invention, a computer program is disclosed, comprising computer program code means adapted to perform the steps of the described methods, when said program is run on processing means of a network entity of an OFDMA network, said processing means being for example a computer, a digital signal processor, a field-programmable gate array (FPGA), an application-specific integrated circuit (ASIC), a micro-processor, a micro-controller, or any other form of programmable hardware. In other words, a computer program comprising instructions, causing a computer executing the program to perform all steps of the described method, when the program is run on a computer. A digital data storage medium is also provided for storing a computer program comprising instructions, causing a computer executing the program to perform all steps of the disclosed methods when the program is run on a computer.

Consequently, according to the invention, a method, system and storage medium according to the independent claims are provided. Favourable embodiments are defined in the dependent claims.

These and other aspects and advantages of the invention will be apparent from and elucidated with reference to the embodiments described hereinafter.

## Description of the drawings

For the purpose of aiding the understanding of the characteristics of the invention, according to a preferred practical embodiment thereof and in order to complement this description, the following figures are attached as an integral part thereof, having an illustrative and non-limiting character:

   Figure 1 depicts a schematic diagram showing a wireless system, where the proposed solution is applied according to an embodiment of the invention.

   Figure 2 shows a schematic diagram illustrating gain improvement due to the division of a sector in several subsectors, according to an embodiment of the invention.

   Figure 3 shows a schematic diagram of a wireless system with a user (in subsector P) served by means of SU-MIMO technique, where an embodiment of the invention can be applied.

## Detailed description of the invention

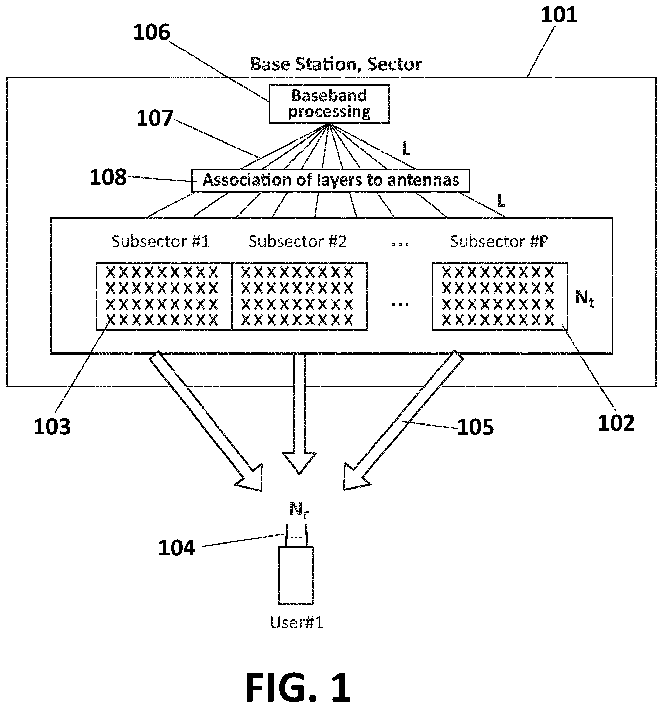

Figure 1 illustrates (without limitation purposes) a wireless system, where the proposed solution is applied according to an embodiment of the invention. The wireless system (or wireless network) comprises at least a base station, serving a user (user device) by means of SU-MIMO techniques (105) (or in other words, the wireless system is a SU-MIMO wireless system). The embodiments of the invention are focused in the SU-MIMO operation of the wireless system with a single user device, but it is not mandatory that all the user devices served by the wireless system are served using SU-MIMO techniques (pure SU-MIMO wireless system), that is, in some embodiments the wireless system will be a pure SU-MIMO wireless system but in other embodiments, the wireless system may serve some user devices with SU-MIMO techniques and other user devices with MU-MIMO techniques. In other words, the wireless system (even the same base station) can serve some user devices as single users using SU-MIMO techniques and serve other user devices using MU-MIMO techniques.

The base station comprises at least one sector (101), each sector comprising P subsectors (102), each subsector having $N_t$ transmit antenna elements (103), capable of generating an independent set of wireless beams. The user device is assumed to be equipped with $N_r$ receive antenna elements (104). The base station benefits from full digital control at baseband processing level (106) of up to $L$ simultaneous antenna elements (107) across the P subsectors of the sector (that is, the base station has amplitude and phase control of a maximum of L antenna elements simultaneously or, in other words, the baseband processing unit of the base station can control a maximum of L transmit chains simultaneously), and usually have some a-priori knowledge of the RF channel (for example, of the constant channel matrix H or the channel distribution information) between the $PN_t$ transmit antenna elements in the sector and the user device $N_r$ receive antenna elements, at the position of the user device. In the embodiments of the invention, L is lower than the total number of transmit antennas at the base station side, $PN_t$. Generally speaking, P, $N_t$, $N_r$, and L are system design features which may have any value depending on the wireless systems where any of the proposed embodiments is applied.

As it will be explained later, the proposed mechanism for association of layers to antenna elements (108), optimizes the actual combination of L transmit antenna elements among the $PN_t$ antenna elements contained in the sector, for transmission to the user device with the highest possible performance (or in other words, such that SU-MIMO performance is maximized).

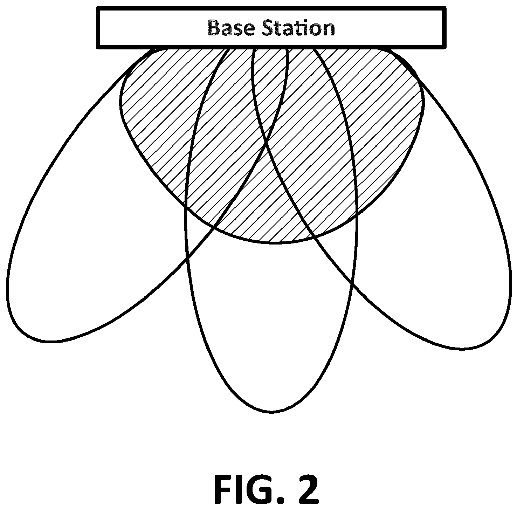

The P subsectors introduced in the system provide better resolution capabilities thanks to the natural isolation provided by the spatial characteristics of the subsector antennas. As an example, Figure 2 illustrates a scenario where different users are served by different subsectors within a given sector. Partitioning the sector into P subsectors provides an additional gain compared to a more traditional scenario without subsectors, because subsector antennas can point more precisely towards the user locations thus improving the link budget. This obviously requires some mechanism at the base station to identify the best subsector for each user and to associate specific transmit/receive antennas to users depending on the channel characteristics.

Even though, for conciseness purposes, the techniques described in the embodiments refer to downlink operation, a person skilled in the art can easily apply the same embodiments described here to uplink operation.

The aim of the proposed embodiments is to optimize the performance of spatial multiplexing techniques in wireless systems using SU-MIMO techniques (SU-MIMO wireless systems) or, in other words, to achieve optimum association of antenna elements to spatial layers in SU-MIMO so that user device throughput is maximized. In MIMO systems, spatial layers are also called streams, or spatial eigen-modes (eigenmodes) of the channel and represent the modes of propagation through which information can be conveyed between the base station and the user device; layers must always be associated to antenna elements (antennas) for their transmission, in a process sometimes called "layer mapping".

Now, it will be detailly explained how this optimization is achieved.

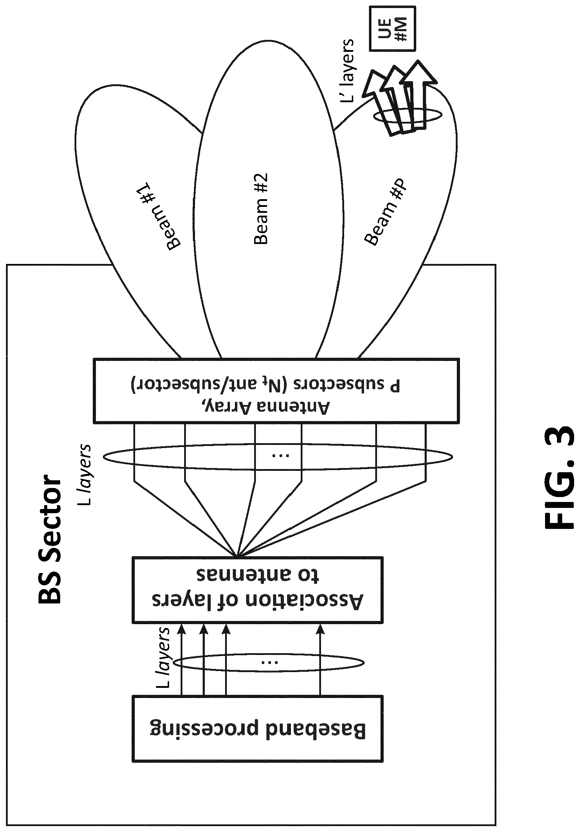

Fig. 3 illustrates a scenario (a wireless system) where the proposed embodiments can be applied. Here, a user (user device) #M in subsector P is served in SU-MIMO by a suitable combination of $L$ antenna elements across the $P$ subsectors from the $PN_t$ transmit antenna elements; being L the maximum number of antenna elements which (at baseband processing level) the base station can have simultaneous amplitude/phase control in said sector. These L antenna elements will generate L' spatial layers for serving the user #M, being L' the channel matrix rank (the number of singular values not equal to zero of the channel matrix).

SU-MIMO performance may be impacted by the following effects:

- Cross-coupling between antenna elements at transmission and reception sides.

- (Low) Signal to noise ratio (SNR) at the user device location.

- Presence of scattering and/or multipath phenomena.

The SU-MIMO performance will also depend of other values as the channel condition number and the channel matrix rank. The channel condition number generally varies with time and frequency; it is related with the channel matrix rank (the number of singular values not equal to zero in the channel matrix H, it is thus an indicator of how many data streams can be spatially multiplexed on the MIMO channel) but provides better insight on the feasibility of the channel to exhibit multiple spatial layers for wireless transmission. While the channel rank represents a hard limit to the number of spatial layers supported by the channel, the condition number is a real number reflecting the ratio between the magnitudes of the eigenmodes with respectively highest and lowest powers. It states how performance will be degraded as a result of the different relative magnitudes of the eigenmodes: if the condition number is high, the highest eigenmodes will dominate over the weakest ones, and performance will be very sensitive to noise-induced errors. The channel matrix is thus said to be ill-conditioned. In contrast, if the condition number is low, the eigenmodes will have similar magnitudes and performance will be more robust against channel noise. For a given channel rank it can be said that the lower the condition number, the better the ability of the channel to resolve multipaths. A practical rule of thumb states that, if the channel condition number is larger than the signal to noise ratio (SNR), MIMO separation of spatial layers will not work properly, and it may be preferable to fall back to SU-MIMO operation.

If the transmitter at the base station benefits from full a-priori knowledge of the channel state information then the constant channel capacity can be obtained in closed form. Specifically, in a SU-MIMO system with *M* receive and *N* transmit antenna elements, the capacity C assuming perfect channel knowledge at the transmit side is given by the following expression:

$$C(Q,H) = log\left|\mathbf{I}_M + \mathbf{HQH^H}\right|,$$

where *H* is the *MxN* channel matrix, $\mathbf{I}_M$ is the *MxM* identity matrix and the transmit covariance matrix *Q* has dimension *NxN* and is defined by

$$Q = \{Q_{ij}\} = \mathbb{E}\left[x_i x_j^T\right],$$

where $x_i x_j$ are the complex baseband symbols (the mathematical representation of the baseband signals to be transmitted in complex notation) to be transmitted by the antenna elements at a given time, and the transmit power is given by $P_T = Tr(Q)$, where *Tr()* denotes the trace operator.

The actual capacity value therefore depends on the choice of the transmit covariance matrix *Q*, which in turn depends on the power distribution among antenna elements and the actual antenna elements taking place in the transmission. Capacity also depends on the channel rank (*L'*) and it is usually estimated at the receiver side and fed back to the transmitter. For a given covariance matrix *Q* (obtained as defined above from the complex baseband symbols to be transmitted), and referring to the scenario in Fig. 3 where a user device is served by a suitable combination of *L* antenna elements, the optimum combination of L transmit antenna elements (for transmission to the user device with the highest possible capacity, $C_{max}$) will be the L transmit antenna elements which maximizes the following expression:

$$C_{max} = \max_{H_i}\{log\left|\mathbf{I}_{N_r} + \mathbf{H}_i\mathbf{QH}_i^{\mathbf{H}}\right|\}$$

where $I_{N_r}$ is the $N_rxN_r$ identity matrix and $H_i$ is the *i*-th channel matrix constructed between the $N_r$ receive antennas at the user's device and a given combination $A_i$ of *L* transmit antenna elements at the base station:

$$H_i = (h_{mn})|_{N_r xL} , m = 0, ..., N_r - 1, n \in A_i, , i = 0, ..., C_{PN_t}^L - 1..$$

where $h_{mn}$ denote the elements of the channel matrix H between the $PN_t$ transmit antenna elements and the $N_r$ receive antenna elements. $A_i$ will be any possible combination of $PN_t$ antenna elements indices (spanning from 0 to $PN_t$ - 1) taken *L* by *L* without repetition. For $PN_t$ antenna elements, the number of possible combinations (groups) taken *L* by *L* without repetition is given by:

$$C_{PN_t}^L = \binom{PN_t}{L} = \frac{(PN_t)!}{L!\,(PN_t - L)!}$$

So

$$i = 0, ..., C_{PN_t}^L - 1.$$

As an example, with L=2 and with 4 antenna elements ($PN_t$ = 4), numbered 0, 1, 2, 3, there are six combinations of indices leading to six sets of indices $A_i$ = {{0,1}, {0,2}, {0,3}, {1,2}, {1,3}, {2,3}}.

The transmit covariance matrix *Q* is an LxL matrix defined by

$$Q = \{Q_{ij}\} = \mathbb{E}\left[x_i x_j^T\right],$$

where $x_i x_j$ are the complex baseband symbols (the mathematical representation of the baseband signals to be transmitted in complex notation) to be transmitted by the L antenna elements of $A_i$ at a given time, and the total transmit power is given by $P_T$ = $Tr(Q)$, where $Tr()$ denotes the trace operator.

The above formulas allow the selection of the optimum combination of L transmit antenna elements that maximizes SU-MIMO capacity under known (constant) channel conditions. In other words, in order to maximize SU-MIMO performance in downlink, and if the base station has perfect a-priori knowledge of the channel between the transmit and the receive antenna elements (for example, of the constant channel matrix), the optimum combination Ai of $L$ antennas that maximize performance will be those that yields maximum channel capacity according to the following expression:

$$C_{max} = \max_{H_i}\{log|\mathbf{I}_{N_r} + \mathbf{H}_i\mathbf{Q}\mathbf{H}_i{}^{\mathbf{H}}|\}$$

(that is, the combination Ai which has a higher value of capacity C than any other combination of antenna elements Ai; in the above embodiment, this combination will be the combination Ai which has a capacity $C_{max} = \max_{H_i}\{log|\mathbf{I}_{N_r} + \mathbf{H}_i\mathbf{Q}\mathbf{H}_i{}^{\mathbf{H}}|\}$).

Several techniques could be used to find the optimum combination of L antennas which maximizes the channel capacity. For example, using the singular value decomposition (SVD) of the channel matrix H, and the so-called water-filling algorithm (as stated on A. Goldsmith, S. A. Jafar, N. Jindal, S. Vishwanath, "Capacity Limits in MIMO Systems", available at https://web.stanford.edu/class/archive/ee/ee359/ee359.1062/cup_mimo.pdf), the MIMO channel can be converted into L' parallel (where L' is the channel matrix rank), non-interfering channels by means of a simple precoding matrix at transmission (SVD finds the available eigen-channels (other way of calling the eigenmodes of the channel) for SU-MIMO transmission, while the water-filling algorithm reinforces the strongest eigen-channels and reduces the power level of the smallest ones thus achieving maximum channel capacity). In these conditions, the resulting capacity is given by:

$$C = \sum_{e=1}^{L'} \left(log(\mu\sigma_e^2)\right)^+,$$

where $\sigma_e$ are the L' singular values of the eigenmodes (spatial layers) of the channel matrix $H_i$ of the channel between the $N_r$ receive antennas at the user's device and a given combination $A_i$ of $L$ transmit antenna elements, $x^+$ is defined as max (x, 0), and $\mu$ is the so-called waterfill level, calculated from the expression:

$$P_e = \left(\mu - \frac{1}{\sigma_e^2}\right)^+, 1 \leq e \leq L',$$

with $P_e$ being the power of the e-th eigenmode of the channel and $P_T = \sum_e P_e$ the total transmit power. Roughly speaking, water-filling reserves more power to the eigenmodes with higher singular values and vice versa. The singular values are related to the relative magnitudes of the eigenmodes.

In this embodiment, the combination of L antenna elements which generates the L' spatial layers (also called spatial eigenmodes) which maximize the capacity expression is found using the above stated formula for the capacity and this combination will be the L antenna elements which maximize the SU-MIMO performance.

The above embodiments allow the selection of the optimum combination of $L$ transmit antenna elements that maximizes SU-MIMO capacity, under known (constant) channel conditions. In practice, wireless channels are rarely constant, but the above strategy is still valid within a time given by the channel's coherence time which is a function of the Doppler spread of the receiver and the movement of the surrounding obstacles.

In systems with moderate to high user mobility, perfect channel state information may not be available at the transmitter. In this case, it is more appropriate to maximize the ergodic capacity (defined as the average of the capacity achieved with each channel realization) which, for a zero-mean spatially white channel model (and no channel state information at the transmitter), is given by the following expression:

$$C_{max} = \max_{H_i} \left\{ \mathbb{E}_{H_i} \left[ log \left| \mathbf{I}_{N_r} + \frac{P_T}{N_r} \mathbf{H}_i \mathbf{H}_i{}^{\mathbf{H}} \right| \right] \right\},$$

where $\mathbb{E}_{H_i}$ denotes the expectation operator over the channel matrix $H_i$ (of the channel between the $N_r$ receive antennas at the user's device and a given combination $A_i$ of $L$ transmit antenna elements), and $P_T$ is the total transmit power. Selecting the combination of transmit antennas that maximizes the above expression leads to maximum SU-MIMO performance during a time given by the channel's coherence time.

Summarizing, in order to maximize SU-MIMO performance in a subsector-based SU_MIMO wireless system, the combination of L transmit antenna elements that yields maximum channel capacity is selected. In an embodiment, in order to do so, the following steps will be followed (for clarity purposes, and without any limitation purpose, the steps will be explained for a SU_MIMO wireless system as the one shown in figures 1 or 3). The proposed method will usually be carried out for a given time instant, as baseband processing techniques are based on discrete time instants, whose interval is defined by the communication standard being used by the wireless system (for example in LTE the instants are always multiples of 1 ms). Hence the exact time instant in which this algorithm (method steps) is carried out is a design option that will depend on the communication standard used (that is why the algorithm is explained here for "a given time instant" without loss of generality). Likewise, the algorithm can be generally repeated with a periodicity time that also depends on the standards specification (in LTE may be 1 ms and in other communication standards like for example 5G, it can be different):

1. Select a combination (group) $A_i$ of $L$ transmit antenna elements, among all possible groups of $PN_t$ antenna elements indices (spanning from 0 to $PN_t$ - 1, as the total number of transmit antenna elements of the sector is $PN_t$) taken $L$ by $L$ without repetition. For $PN_t$ antenna elements, the number of possible combinations (groups) taken $L$ by $L$ without repetition is given by:

$$C_{PN_t}^L = \binom{PN_t}{L} = \frac{(PN_t)!}{L!\,(PN_t - L)!}$$

So $A_i$ will be one of said combinations with i being in the range $0, ..., C_{PN_t}^L - 1$.

Go to step 2.

2. Calculate the channel capacity as a function of the actual selected combination of $L$ transmit antennas. Generally speaking, the channel capacity will be calculated for the given time instant in which the present algorithm is being executed, as the channel capacity usually is time dependent.
Usually, to calculate the channel capacity it is necessary to obtain a channel (sub)matrix $H_i$ between the $L$ transmit antennas contained in $A_i$ and the $N_r$ receive antennas, with dimensions $N_r$x$L$. That is: $H_i = (h_{mn})|_{NrxL}$, $m \in N_r$, $n \in A_i$, where $h_{mn}$ denotes elements of the channel matrix.
Go to step 3.

3. If the calculated channel capacity is the highest channel capacity compared to all previous iterations, (that is, if it is the first channel capacity calculated or the channel capacity is the highest of all previously calculated), record its value as the highest channel capacity number and record the actual combination of transmit antenna elements $A_i$ as the optimum combination of antenna elements; and go to step 4. Otherwise go directly to step 4 without recording any value or combination of transmit antenna elements.

4. Repeat steps 1 to 3 for a different combination $A_i$ of transmit antenna elements until all possible combinations $A_i$ of transmit antenna elements are considered. Or in other words, check if all possible combinations $A_i$ of transmit antenna elements have been considered; if so, end the method and if not, repeat steps 1 to 3, preferably for a different combination $A_i$ of transmit antenna elements (that is, a combination of transmit antenna elements and receive antenna elements not considered in any previous iteration).

In an embodiment, said obtained optimum combination of transmit antennas for application of SU-MIMO techniques is kept over a duration lower or equal than the coherence time of the channel (between the $PN_t$ transmit antenna elements and the user's antenna elements). And optionally, the algorithm to find the optimum combination of transmit antenna elements is repeated after the coherence time of the channel has passed. Likewise, this algorithm can be generally repeated with a periodicity time equal to the coherence time of the channel.

The proposed mechanism (the above explained steps) can be performed in any electronic device with enough processing capabilities. It may be performed for example by the base station itself (for example, by the baseband processing unit of the base station) or by any other node internal or external to the wireless system (wireless network).

The proposed embodiments can be implemented by means of software elements, hardware elements, firmware elements, or any suitable combination of them.

Note that in this text, the term "comprises" and its derivations (such as "comprising", etc.) should not be understood in an excluding sense, that is, these terms should not be interpreted as excluding the possibility that what is described and defined may include further elements, steps, etc.

The matters defined in this detailed description are provided to assist in a comprehensive understanding of the invention. Accordingly, those of ordinary skill in the art will recognize that variation changes and modifications of the embodiments described herein can be made without departing from the scope of the invention. Also, description of well-known functions and elements are omitted for clarity and conciseness. Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

## Claims

1. A method to optimize the performance of a SU-MIMO wireless communications system, said wireless communications system comprising at least a base station, with at least one sector (101) having $P$ subsectors (102) with $N_t$ transmit antenna elements (103) each and a user device with $N_r$ receive antenna elements (104), being L the maximum number of transmit antenna elements simultaneously controllable by the base station at baseband processing level, **characterized in that** the method comprises the following steps:

   a) Selecting a combination $A_i$ of L transmit antenna elements from the $PN_t$ transmit antenna elements and going to step b);
   b) Calculating the channel capacity between the L transmit antenna elements contained in $A_i$ and the $N_r$ receive antenna elements of the user device; and going to step c);
   c) If the calculated channel capacity is higher than a recorded maximum channel capacity or if there is no recorded maximum channel capacity, recording the value of the calculated channel capacity as the maximum channel capacity and recording actual combination of transmit antenna elements $A_i$, as the optimum combination of transmit antenna elements; and going to step d);
   d) If all possible combinations $A_i$ of L transmit antenna elements have been selected, ending the method, otherwise going to step a).

2. A method according to claim 1, where step b) further comprises obtaining a channel matrix $H_i$ between the $N_r$ receive antenna elements of the user device and the L transmit antenna elements contained in $A_i$.

3. A method according to claim 2, where $H_i = (h_{mn})|_{N_r x L}$, $m = 0,...,N_r - 1$, $n \in A_i$, where $h_{mn}$ denotes elements of the channel matrix H between the $PN_t$ transmit antenna elements of the sector of the base station and the $N_r$ receive antenna elements of the user device.

4. A method according to any of the previous claims where the optimum combinations of transmit antenna elements obtained are used by the wireless communications system during a time lower or equal than the coherence time of the channel between the transmit and the receive antenna elements.

5. A method according to any of the previous claims, wherein said channel capacity is calculated as a constant channel capacity.

6. A method according to claim 5, wherein said constant channel capacity is given by:

$$C = log\left|\mathbf{I}_{N_r} + \mathbf{H}_i\mathbf{Q}\mathbf{H}_i^{\mathbf{H}}\right|$$

where $I_{N_r}$ is the $N_r \times N_r$ identity matrix and $H_i$ is the $i$-th channel matrix constructed between the $N_r$ receive antenna elements of the user device and the L transmit antenna elements contained in $A_i$ and Q the transmit covariance matrix.

7. A method according to claim 6, where the transmit covariance matrix $Q$ is an LxL matrix defined by:

$$Q = \{Q_{ij}\} = \mathbb{E}\left[x_i x_j^T\right]$$

where $x_i x_j$ are the complex baseband symbols to be transmitted by the L transmit antenna elements contained in $A_i$.

8. A method according to claim 5, wherein the channel capacity is given by:

$$C = \sum_{e=1}^{L'} \left(log(\mu\sigma_e^2)\right)^+,$$

where L' is the channel rank of the channel matrix, $\sigma_e$ are the singular values of the channel matrix $H_i$ constructed between the $N_r$ receive antennas at the user's device and the given combination $A_i$ of L transmit antenna elements, $x^+$ is defined as max $(x, 0)$, and $\mu$ is the so-called waterfill level, calculated from the expression:

$$P_e = \left(\mu - \frac{1}{\sigma_e^2}\right)^+, 1 \leq e \leq L',$$

with $P_e$ being the power of the $e$-th eigenmode of the channel and $P_T = \sum_e P_e$ the total transmit power.

9. A method according to any of the claims 1-4, wherein then said channel capacity is an ergodic capacity.

10. A method according to claim 9, wherein said ergodic capacity is given by:

$$C = \mathbb{E}_{H_i}\left[log\left|\mathbf{I}_{N_r} + \frac{P_T}{N_r}\mathbf{H}_i\mathbf{H}_i^{\mathbf{H}}\right|\right]$$

where $\mathbb{E}_{H_i}$ denotes the expectation operator over the channel matrix $H_i$, $H_i$ is the $i$-th channel matrix constructed between the $N_r$ receive antenna elements of the user device and the L transmit antenna elements contained in $A_i$, $I_{N_r}$ is the $N_r \times N_r$ identity matrix and $P_T$ is the total transmit power.

11. A method according to any of the previous claims, where $A_i$ is a combination selected from all possible combinations of $PN_t$ antenna elements taken $L$ by $L$ without repetition, with i being one of $0, \ldots, C_{PN_t}^L - 1$, being $C_{PN_t}^L$ the number of possible combinations given by:

$$C_{PN_t}^L = \binom{PN_t}{L} = \frac{(PN_t)!}{L!\,(PN_t - L)!}.$$

12. A method according to any of the previous claims, where the SU-MIMO wireless communications system is a 2G, 3G, 4G or 5G mobile communications system.

13. A SU-MIMO wireless communications system comprising:

- at least a base station, with at least one sector (101) having $P$ subsectors (102) with $N_t$ transmit antenna elements (103) each, the base station having a baseband processing unit (106) capable of simultaneously control a maximum of L transmit antenna elements;
- a user device with $N_r$ receive antenna elements (104);
- an electronic device to optimize the performance of the wireless communications system, configured to:

    a) Select a combination $A_i$ of L transmit antenna elements from the $PN_t$ transmit antenna elements;
    b) Calculate the channel capacity between the L transmit antenna elements contained in $A_i$ and the receive antenna elements of the user device;
    c) If the calculated channel capacity is higher than a recorded maximum channel capacity or if there is no recorded maximum channel capacity, record the value of the calculated channel capacity as the maximum channel capacity and record actual combination of transmit antenna elements $A_i$, as the optimum combination of transmit antenna elements;
    d) Repeat a), b) and c), until all possible combinations $A_i$ of L transmit antenna elements have been selected.

**14.** A system according to claim 13, where the electronic device is part of the base station.

**15.** A non-transitory computer readable medium encoded with a computer program comprising instructions for carrying out all the steps of the method according to any of the claims 1-12, when said computer program is executed on a computer system.

**101**

**106**

Base Station, Sector

Baseband processing

**107**

L

**108** Association of layers to antennas

L

Subsector #1      Subsector #2      ...      Subsector #P

XXXXXXXXX      XXXXXXXXX            XXXXXXXXX
XXXXXXXXX      XXXXXXXXX            XXXXXXXXX
XXXXXXXXX      XXXXXXXXX    ...     XXXXXXXXX    $N_t$
XXXXXXXXX      XXXXXXXXX            XXXXXXXXX

**103**                                    **105**        **102**

$N_r$

**104**

User#1

# FIG. 1

# FIG. 2

**FIG. 3**

Europäisches
Patentamt

European
Patent Office

Office européen
des brevets

**EUROPEAN SEARCH REPORT**

Application Number

EP 19 38 2801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 979 397 A (UNIV HOHAI) 1 May 2018 (2018-05-01) * paragraphs [0006], [0013], [0018], [0042], [0044], [0046], [0052], [0054], [0055], [0056], [0057], [0060]; figure 1 * | 1-15 | INV. H04B7/06 |
| X | US 2008/117961 A1 (HAN SHUANGFENG [KR] ET AL) 22 May 2008 (2008-05-22) * paragraphs [0022], [0031], [0040], [0046], [0074] - [0078], [0086]; figures 2,4, * | 1-15 | |

TECHNICAL FIELDS
SEARCHED    (IPC)

H04B
H01Q

The present search report has been drawn up for all claims

| Place of search | Date of completion of the search | Examiner |
|---|---|---|
| Munich | 5 March 2020 | Panahandeh, Ali |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 38 2801

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2020

| Patent document cited in search report | | Publication date | Patent family member(s) | Publication date |
|---|---|---|---|---|
| CN 107979397 | A | 01-05-2018 | NONE | |
| US 2008117961 | A1 | 22-05-2008 | KR 20080046420 A | 27-05-2008 |
| | | | US 2008117961 A1 | 22-05-2008 |

EPO FORM P0459

For more details about this annex : see Official Journal of the European Patent Office, No. 12/82